(19)

Europäisches
Patentamt

European
Patent Office

Office européen
des brevets

(11) **EP 4 001 226 A1**

(12) **DEMANDE DE BREVET EUROPEEN**

(43) Date de publication:
**25.05.2022 Bulletin 2022/21**

(21) Numéro de dépôt: **21208637.5**

(22) Date de dépôt: **16.11.2021**

(51) Classification Internationale des Brevets (IPC):
**C03B 1/00** (2006.01)     **C03C 1/00** (2006.01)
**G01J 3/46** (2006.01)     **G06T 7/90** (2017.01)

(52) Classification Coopérative des Brevets (CPC):
**C03B 1/00; C03C 1/002; G06T 7/90**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **17.11.2020 FR 2011757**

(71) Demandeur: **SAINT-GOBAIN ISOVER**
**92400 Courbevoie (FR)**

(72) Inventeurs:
• **GROSS, Isabell**
  **93300 Aubervilliers (FR)**
• **CLATOT, Richard**
  **93300 Aubervilliers (FR)**

(74) Mandataire: **Ex Materia**
**2, rue Hélène Boucher**
**78280 Guyancourt (FR)**

(54) **PROCÉDÉ DE TRAITEMENT D'UN CALCIN PAR ANALYSE COLORIMÉTRIQUE**

(57) La présente invention concerne un procédé de traitement d'un calcin (6), caractérisé en ce qu'il comprend :
- une étape de détection d'une pluralité de types de verre contenus dans le calcin (6) par colorimétrie,
- une étape de calcul d'une quantité des différents types de verre détectés dans le calcin (6) en fonction des différents types de verre détectés par colorimétrie, une information représentative de la quantité de chacun des types de verre du calcin (6) étant calculée en fonction d'une superficie couverte par chaque couleur spécifique à chaque type de verre du calcin, ladite superficie étant mesurée sur une image acquise (16) du calcin (6),
- une étape de détermination d'une quantité d'oxyde et/ou d'un potentiel redox associés au calcin (6) en fonction de la quantité des différents types de verre détectés dans le calcin (6).

[fig 1]

EP 4 001 226 A1

**EP 4 001 226 A1**

## Description

La présente invention se rapporte au domaine de la fabrication de fibres minérales à partir de verre recyclé, et concerne plus particulièrement un procédé de traitement d'un calcin, ledit procédé précédant la fonte du verre.

Les échantillons de fragments de verre, ou calcin, sont utilisés dans la fabrication de divers produits à base de verre. Par exemple, dans le domaine de l'isolation, on utilise couramment des fibres minérales, obtenues en grande partie à base de calcin. Le calcin peut également être utilisé dans la fabrication de bouteilles et autres récipients en verre.

La fabrication de la fibre minérale se déroule selon un procédé consistant tout d'abord à chauffer le calcin dans un four verrier, à une température suffisante pour faire fondre le verre, soit environ 1500°C. Le verre fondu est ensuite conduit dans un dispositif de centrifugation de type assiette de fibrage, conduisant à la création de fibres qui sont encollées sur leur passage vers un convoyeur sur lequel elles sont ensuite séchées, cuites et mises en forme.

La température du four n'est pas le seul facteur influent d'une fonte optimale du calcin. En effet, le four est également paramétré selon un équilibre redox, ou équilibre oxydo-réducteur, précis et adapté au calcin, afin de fondre ce dernier de manière stable et sans apparition d'impuretés. L'équilibre redox idéal à appliquer aux paramètres du four est toutefois dépendant de la composition du calcin, à savoir quels types de verre celui-ci contient et en quelles quantités.

Il est connu d'effectuer de manière visuelle une supervision du calcin afin de déterminer le type de verre prédominant. A titre d'exemple, parmi les types de verre régulièrement retrouvés dans les calcins, les verres clairs ou de couleur verte ou ambrée sont couramment représentés. Suite à cette supervision faite par l'utilisateur, le four verrier est paramétré en conséquence pour que l'équilibre redox soit adapté au type de verre prédominant.

La présente invention s'inscrit dans ce contexte de paramétrage du four en proposant un procédé de traitement d'un calcin, caractérisé en ce qu'il comprend :

- une étape de détection d'une pluralité de types de verre contenus dans le calcin par colorimétrie,

- une étape de calcul d'une quantité des différents types de verre détectés dans le calcin en fonction des différents types de verre détectés par colorimétrie, une information représentative de la quantité de chacun des types de verre du calcin étant calculée en fonction d'une superficie couverte par chaque couleur spécifique à chaque type de verre du calcin, ladite superficie étant mesurée sur une image acquise du calcin lors de l'étape de détection,

- une étape de détermination d'une quantité d'oxyde et/ou d'un potentiel redox associés au calcin en fonction de la quantité des différents types de verre détectés dans le calcin.

Ainsi, grâce à un tel procédé, la composition du calcin est automatiquement déterminée, et sa composition chimique déduite. Sachant cela, il est alors possible de paramétrer le four afin que ce dernier soit adapté pour la fonte optimale du calcin. Il est ainsi possible d'automatiser entièrement ce procédé, et donc de limiter le risque d'erreur.

L'étape de détection permet de déterminer quels types de verre sont présents dans le calcin. La détection par colorimétrie est une méthode permettant d'analyser avec précision la couleur de chacun des fragments du calcin et d'en déduire le type de verre relatif à chacune des couleurs captées. Pour assurer une telle détection, à titre d'exemple, le calcin peut être disposé en regard d'un dispositif d'acquisition d'image et être éclairé par une source lumineuse, de sorte que le calcin soit disposé entre la source lumineuse et le dispositif d'acquisition d'image. Selon un autre exemple, la source lumineuse et le dispositif d'acquisition d'image peuvent être disposés du même côté du calcin. Dans un tel exemple, le calcin est disposé sur un fond réverbérant afin que le dispositif d'acquisition d'image puisse capter les rayons lumineux émis par la source lumineuse. Les rayons lumineux produits par la source lumineuse traversent au moins partiellement chacun des fragments du calcin, et la lumière transmise est ensuite captée par le dispositif d'acquisition. Grâce à la capture d'infrarouges du dispositif d'acquisition d'image, les différents types de verre clairs peuvent être détectés, et non uniquement les types de verre coloré, par exemple de couleur verte ou ambrée.

Via la colorimétrie, les différents types de verre sont identifiés. Une image du calcin est alors acquise et est par la suite utilisée pour déterminer la quantité des différents types de verre dans le calcin. Le procédé se poursuit alors par le calcul de ces dites quantités. Autrement dit, cette étape de calcul permet de déterminer la répartition relative de chaque type de verre au sein du calcin. Ce calcul se fait à l'aide d'une mesure de la superficie des différents types de verre grâce à l'image acquise du calcin.

Par superficie totale, il faut comprendre la somme des superficies des différentes taches correspondant à une même couleur et donc à un type de verre en particulier. Cette superficie est donc mesurée pour chaque fragment de verre du calcin. Le calcul prend en compte chacun des fragments apparaissant sur l'image acquise du calcin et calcule la superficie de chacun d'entre eux en prenant en compte la résolution de l'image acquise du calcin, par exemple afin d'obtenir la superficie réelle des fragments dans le cas où l'image acquise du calcin modifie une échelle de taille desdits fragments.

Une fois la superficie de chaque fragment mesuré, toutes les superficies mesurées sont triées par type de verre afin d'obtenir une superficie totale pour chacun des types de verre et ainsi déterminer la quantité de chacun d'entre eux.

Le procédé effectue enfin l'étape de la détermination de la quantité d'oxyde présente dans le calcin. Un oxyde est un composé combinant un élément chimique avec de l'oxygène. Au sein d'un calcin, il existe des oxydes prépondérants comme par exemple la silice. Un calcin comprend également des oxydes métalliques, tels que l'oxyde de fer, l'oxyde de cuivre ou l'oxyde de chrome par exemple. Plus particulièrement, la présence de tel ou tel oxyde et sa quantité dans les différents types de verre est un paramètre qui influe sur le potentiel redox du calcin et donc sur l'opération de cuisson du calcin dans le four verrier. Déterminer la quantité de tel ou tel oxyde dans le calcin offre donc une possibilité d'ajustement des paramètres du four verrier afin de procéder à une fonte optimale de celui-ci. L'objectif de cette étape est ainsi de déterminer la quantité d'au moins un type d'oxyde contenue dans le calcin au total. Ainsi, la quantité de cet oxyde de fer dépend de la quantité de chacun des types de verre présents dans le calcin et déterminée lors de l'étape de calcul, lesdits types de verre ayant chacun un pourcentage massique de tel ou tel oxyde qui lui est propre.

Selon une caractéristique de l'invention, l'étape de détermination du procédé permet de déterminer une quantité d'oxyde de fer associée au calcin en fonction de la quantité des différents types de verre détectés dans le calcin.

D'une manière générale, la quantité d'oxyde de fer est une constante relative à chacun des différents types de verre. Ainsi, il est possible d'associer à chaque type de verre un pourcentage massique d'oxyde de fer qui lui est propre et de servir de cette information pour paramétrer en conséquence le four verrier.

Selon une caractéristique de l'invention, l'étape de détection consiste en une première phase d'acquisition de l'image acquise du calcin, puis en une deuxième phase de traitement colorimétrique de ladite image acquise du calcin. La première phase d'acquisition permet de capturer l'image acquise du calcin via un dispositif d'acquisition. A titre d'exemple, le dispositif d'acquisition peut être une caméra.

Selon une caractéristique de l'invention, l'étape de détection peut être précédée d'une étape de répartition du calcin. Idéalement, afin de ne pas fausser l'acquisition d'image et tout ce qui en découle lors de la suite du procédé, les fragments de verre du calcin doivent être avantageusement répartis de sorte à ne pas se chevaucher. Autrement dit, le calcin est réparti, ou étalé, de manière à éviter un chevauchement de plusieurs fragments de verre entre eux afin d'obtenir une image qualitative du calcin.

Selon une caractéristique de l'invention, le dispositif d'acquisition est dépourvu de filtre infrarouge, et l'acquisition s'effectue préférentiellement dans un environnement sombre. De cette manière, le dispositif d'acquisition, notamment en captant les rayons infrarouges, effectue une capture d'image plus précise. Selon un tel agencement, les verres clairs et les fragments les plus petits sont ainsi détectés plus facilement.

La deuxième phase de traitement colorimétrique se déroule après la première phase d'acquisition, dans la mesure où elle nécessite l'image acquise du calcin pour être effectuée. C'est au cours de la deuxième phase de traitement colorimétrique que la couleur de chaque fragment du calcin est détectée.

La deuxième phase de traitement colorimétrique peut être effectuée via un module de traitement d'image. Par traitement colorimétrique, on entend l'utilisation de tous types de module de traitement d'image permettant d'obtenir une correspondance des nuances de couleur apparaissant sur une image acquise en données chiffrées ou lettrées. Le module de traitement d'image peut être inclus dans le dispositif d'acquisition ou bien être indépendant de celui-ci. Le module de traitement d'image est configuré pour recevoir l'image acquise du calcin afin d'analyser cette dernière.

Selon une caractéristique de l'invention, la deuxième phase de traitement colorimétrique de l'image acquise du calcin est effectuée selon un modèle HSV et/ou selon un modèle RGB. L'un ou l'autre des modèles peut être utilisé. Si un seul des modèles est utilisé, le modèle HSV est le plus efficace. Cependant, d'une manière préférentielle, il est avantageux d'utiliser le modèle HSV, puis le modèle RGB pour obtenir un traitement d'image optimal.

L'espace de couleur HSV, en français TSV, est un acronyme signifiant Teinte Saturation Valeur. Chaque donnée de ces trois termes permet de définir n'importe quelle nuance de couleur dans le domaine du visible.

La Teinte est un terme pouvant être représenté par un cercle et est défini par une plage de données s'étendant de 0 à 360°. Chaque degré représente une teinte, selon le tableau suivant :

| Degré | Teinte |
|---|---|
| 0° | Rouge |
| 60° | Jaune |
| 120° | Vert |
| 180° | Cyan |
| 240° | Bleu |
| 300° | Magenta |
| 360° | Rouge |

La saturation est un terme compris entre 0 et 1, reflétant la notion de quantité de couleur. Une saturation se rapprochant de 0 aura tendance à être plus fade tandis qu'une saturation se rapprochant de 1 sera plus saturée.

La valeur est également un terme compris entre 0 et 1, reflétant la notion de brillance ou luminosité. N'importe quelle donnée ayant une valeur égale à 0 est associée à une couleur noire. Plus la valeur se rapproche de 1, plus la couleur associée sera claire.

L'ensemble des différentes données HSV peut être représenté par un cône de révolution, au sein duquel toutes les nuances de couleur du visible peuvent être converties en terme HSV et correspondent toutes à un point de l'aire de ce cône de révolution. La Teinte correspond à la circonférence du cône, la Saturation correspond au rayon du cône et la Valeur correspond à la hauteur du cône.

Le module de traitement d'image selon un modèle HSV traite les images obtenues par le dispositif d'acquisition d'image en considérant uniquement une donnée du modèle HSV, et plus particulièrement uniquement la donnée H de ce modèle HSV.

La donnée V du modèle HSV peut également être utile pour distinguer deux types de verre différents mais présentant une couleur similaire, une telle distinction pouvant être difficile à effectuer avec uniquement la donnée H du modèle HSV.

Tout comme le modèle HSV, le modèle RGB se base sur la valeur de trois données pour définir chacune des nuances de couleur dans le domaine du visible. Chaque couleur est définie en fonction de la valeur de chacune des trois couleurs primaires utilisées pour définir cette couleur, à savoir le rouge R, le vert G et le bleu B. Chacune des valeurs RGB est comprise entre 0 et 255.

Ainsi le modèle RGB peut être utilisé pour effectuer le traitement colorimétrique sur l'image acquise du calcin au cours du procédé de traitement, bien que cela entraîne un traitement plus long qu'un traitement par le modèle HSV étant donné que les trois données du modèle RGB doivent être calculées pour déterminer la couleur de chaque fragment du calcin à partir de l'image acquise du calcin. Le modèle RGB peut également être utilisé à la suite du modèle HSV afin de confirmer ou infirmer la couleur de chaque fragment du calcin déterminée lors du traitement colorimétrique via le modèle HSV.

Selon une caractéristique de l'invention, lors de l'étape de calcul, la quantité des différents types de verre correspond à un volume total propre à chacun des types de verre du calcin et calculé en fonction de ladite superficie. Le calcul du volume constitue un exemple d'unité de mesure calculée grâce à la mesure de la superficie des différents types de verre dans le calcin. Pour calculer le volume de chaque fragment du calcin, il faut prendre en compte une épaisseur de chacun d'entre eux. Dans le cas où le dispositif d'acquisition d'image mis en œuvre par l'invention ne permet pas l'acquisition d'images en trois dimensions, il n'est donc pas possible de déterminer directement le volume de chaque fragment du calcin à partir de l'image acquise de celui-ci. Pour pallier cela, les inventeurs ont déterminé que le volume de chaque fragment est sensiblement relatif à sa superficie. A titre d'exemple, les parties les plus épaisses, et donc plus lourdes, d'une bouteille en verre, comme le goulot ou le fond, se brisent moins aisément que les parties plus fines, et donc plus légères, de la bouteille en verre. Les fragments des parties les plus épaisses ont ainsi tendance à être des fragments présentant une superficie plus élevée que celle des fragments des parties plus fines. Il est également possible d'estimer le volume des fragments de verre par exemple via la couleur de ces derniers, dans la mesure où chaque couleur de verre peut être spécifique à une utilisation. A titre d'exemple, les verres colorés que l'on trouve dans un calcin ont tendance à provenir de bouteilles, tandis que les verres clairs sont plutôt issus de fragments de verre plats, ces derniers ayant en moyenne une épaisseur plus élevée que les verres de bouteilles. Ainsi, à partir de la superficie de chaque fragment du calcin, il est possible d'établir une répartition de volume de chaque type de verre présent dans le calcin. Une telle méthode permet de se rapprocher de la véritable répartition de volume de chaque type de verre du calcin, et ce sans effectuer un long et fastidieux tri du calcin afin de déterminer la répartition de volume réelle.

Selon une caractéristique de l'invention, la superficie couverte par chaque couleur spécifique à chaque type de verre du calcin est calculée en fonction d'une taille de pixels d'un dispositif d'acquisition d'image utilisé pour la première phase d'acquisition et du nombre de pixels d'un motif correspondant à chacune des couleurs. Le calcul de la superficie dépend donc des caractéristiques du dispositif d'acquisition d'image utilisé. Chaque pixel de l'image acquise du calcin peut être coloré d'une couleur relative à un fragment de verre. Si ce n'est pas le cas, cela signifie qu'il n'y a pas de fragment de verre au niveau dudit pixel. Ce dernier n'est donc pas pris en compte pour le calcul de la superficie des fragments du calcin.

Le calcul de superficie peut être fait par le module de traitement d'image, qui va donc détecter les couleurs des fragments du calcin et également calculer sur combien de pixels de l'image acquise s'étend chacune des couleurs détectées. En effectuant le produit du nombre de pixels relatifs à chaque couleur des fragments du calcin par la taille des pixels déterminée par le type de dispositif d'acquisition utilisé, il est donc possible de retrouver la superficie de chaque couleur des fragments du calcin. Ceci étant fait, il en est déduit la répartition relative du volume de chaque type de verre du calcin.

Selon une caractéristique de l'invention, on détermine la quantité d'oxyde dans le calcin en fonction des quantités totales de chacun des types de verre du calcin. D'une manière générale, les oxydes sont présents en quantité non négligeable dans le calcin et influent sur le potentiel redox du calcin. Connaître la quantité d'oxyde, par exemple la quantité d'oxyde de fer dans le calcin, est donc primordial pour opérer une fonte optimale du calcin par la suite. La quantité d'oxyde pour chaque type de verre est une constante connue, d'où l'intérêt d'établir le volume relatif de chaque type de verre au sein du calcin. En multipliant le volume de chaque type de verre du calcin par son pourcentage massique de cet oxyde spécifique, par exemple l'oxyde de fer, on trouve une quantité de cet oxyde spécifique dans le calcin propre à chaque type de verre. En effectuant la somme de chacune de ces quantités et en multipliant le total par la densité du verre, on trouve la quantité totale de cet oxyde spécifique présente dans le calcin.

Si le calcin traité n'est qu'un échantillon d'un ensemble de verre destiné à être fondu, la quantité d'oxyde spécifique, et par exemple d'oxyde de fer, obtenue correspond à un volume relatif au sein de l'ensemble de verre destiné à être fondu, et il est donc possible d'estimer la quantité d'oxyde spécifique, et par exemple d'oxyde de fer, présente dans l'ensemble de verre via un calcul approprié.

La quantité totale d'oxyde spécifique, et par exemple d'oxyde de fer, permet ainsi d'adapter les paramètres du four verrier en conséquence, et ce afin de procéder à une fonte optimale du verre et d'obtenir par la suite un produit fini de qualité.

Selon une caractéristique de l'invention, on détermine le potentiel redox du calcin en fonction d'un potentiel redox de chacun des types de verre présent dans le calcin et de la quantité de chacun des types de verre du calcin. Le potentiel redox de chacun des types de verre peut correspondre au résultat d'un rapport entre la quantité d'ions fer II et la quantité de fer totale comprises au sein de chacun des types de verre. Tout comme le pourcentage massique d'oxyde de fer, le potentiel redox de chaque type de verre est une constante spécifique à chaque type de verre. Bien que l'oxyde de fer puisse être l'élément majoritairement responsable de la variation du potentiel redox du calcin, il existe d'autres éléments métalliques pouvant être pris en compte pour déterminer le potentiel redox du calcin, tels que l'oxyde de cuivre ou l'oxyde de chrome par exemple.

Calculer le potentiel redox du calcin en complément par exemple à la quantité d'oxyde de fer peut être utile dans la mesure où deux types de verre peuvent être d'une couleur semblable et présenter un pourcentage massique d'oxyde de fer semblable également, mais présenter une différence significative au niveau de leur potentiel redox respectif.

Selon une caractéristique de l'invention, le procédé de traitement peut comprendre une étape de paramétrage d'un four verrier destiné à fondre le calcin, l'étape de paramétrage étant postérieure à l'étape de détermination de la quantité d'oxyde et/ou du potentiel redox, ledit paramétrage étant effectué en fonction de la quantité déterminée d'oxyde et/ou du potentiel redox associés au calcin. Une fois la quantité d'oxyde et/ou le potentiel redox du calcin connu(s), de tels résultats peuvent être pris en compte afin de paramétrer le four verrier manuellement, ou bien être utilisés au cours d'un processus entièrement automatisé.

En fonction des résultats obtenus lors des étapes précédentes du procédé de traitement, cette étape de paramétrage consiste à adapter le four, par exemple en termes de température ou d'équilibre redox, afin de fondre le calcin de manière optimale.

Selon une caractéristique de l'invention, lors de l'étape de paramétrage, un équilibre redox du four verrier est modifié par ajout d'additifs, la quantité desdits additifs étant fonction de la quantité d'oxyde et/ou du potentiel redox du calcin. Afin de procéder à une fonte optimale du calcin, l'équilibre redox du four doit être correctement adapté à la composition du calcin destiné à être fondu. Ainsi, au moment de la fonte du calcin, des additifs peuvent être ajoutés afin de modifier l'équilibre redox du four, ledit équilibre redox devant préférentiellement être maintenu à une valeur pouvant par exemple être comprise entre deux valeurs seuils. Les additifs ajoutés sont des composés aptes à augmenter ou diminuer le potentiel redox du calcin, par exemple des agents oxydants.

L'invention couvre également une installation de fabrication de fibres minérales comportant au moins un four verrier et des postes de formage, dans lequel du calcin est déversé dans le four verrier pour l'obtention de verre fondu destiné à alimenter les postes de formage, ladite installation mettant en œuvre un procédé de traitement d'un calcin tel que décrit précédemment.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[fig 1] représente un exemple d'agencement d'une installation de fabrication de fibres minérales mettant en œuvre un procédé de traitement d'un calcin selon l'invention,

[fig 2] est un schéma permettant de décrire un système de mesure du volume des fragments du calcin,

[fig 3] est un tableau détaillant un pourcentage massique d'oxyde de fer et un potentiel redox pour chaque type de verre pouvant être retrouvé dans le calcin.

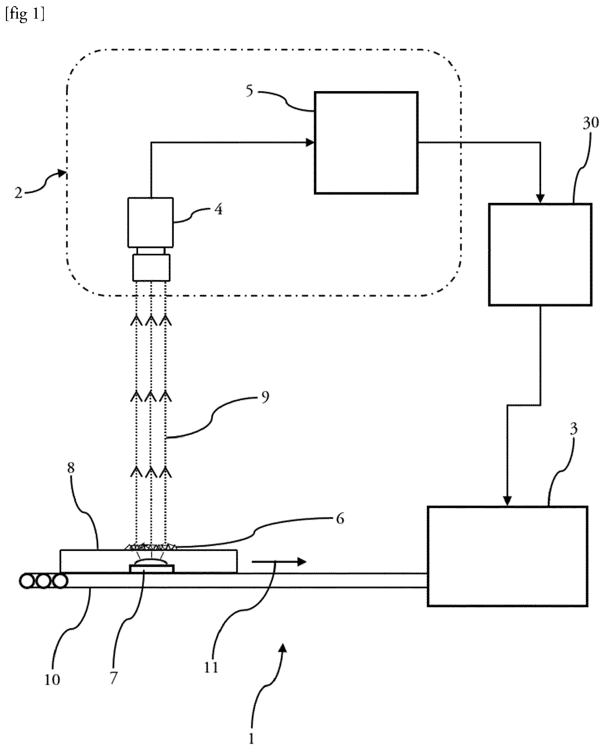

La figure 1 est un agencement d'une installation 1 de fabrication de fibres minérales. L'installation 1 permet de faire fondre au moins un calcin 6 au sein d'un four verrier 3. Une fois la fonte effectuée, le verre fondu peut par exemple circuler jusqu'à un poste de formage, ici non représenté, qui assure la formation des fibres minérales. Il s'agit d'un exemple non exhaustif, le verre fondu pouvant servir à fabriquer tout autre produit fini issu de la fonte du calcin 6, comme par exemple des bouteilles ou du verre plat.

Avant d'être fondu par le four verrier 3, le calcin 6 peut être déplacé par exemple via un convoyeur 10 fonctionnant selon un sens de déplacement 11. Le sens de déplacement 11 est orienté vers le four verrier 3.

Le calcin 6 peut correspondre à un ensemble de fragments de verre pouvant être recyclé ou bien à un échantillon d'un tel ensemble suscité et destiné à être fondu. Dans le cas où le calcin 6 correspond à un échantillon prélevé au sein de l'ensemble de fragments de verre, ledit échantillon présente une répartition de différents types de verre semblable à la répartition des différents types de verre au sein de l'ensemble de fragments de verre.

La composition du calcin 6 est un facteur important afin d'assurer une fonte optimale de celui-ci par le four verrier 3. En effet, en fonction des types de verre présents dans le calcin 6 ainsi que des quantités de chacun desdits types de verre dans le calcin 6, il est possible de paramétrer le four verrier 3 afin d'améliorer la fonte des fragments de verre du calcin 6. Un mauvais paramétrage du four verrier 3 peut conduire à une fonte imparfaite du calcin 6, et par la suite à la fabrication d'un produit fini non conforme ou peu qualitatif.

Afin de pallier cela, le calcin 6, avant d'être fondu au sein du four verrier 3, est soumis à un procédé de traitement mis en œuvre par un système de traitement 2. Le système de traitement 2 comprend notamment un dispositif d'acquisition d'image 4 et un module de traitement d'image 5. Ces deux éléments permettent la mise en œuvre d'au moins une première étape du procédé de traitement qui est une étape de détection. Une telle étape de détection est divisée en une première phase d'acquisition et en une deuxième phase de traitement colorimétrique.

Le dispositif d'acquisition d'image 4 peut par exemple être une caméra dont la fonction est de capturer une image du calcin 6 défilant sur le convoyeur 10 afin de mettre en œuvre la première phase d'acquisition. Afin d'obtenir une image acquise du calcin 6 de manière à ce qu'elle puisse être traitée correctement par la suite, le calcin 6 doit être correctement éclairé pour que le dispositif d'acquisition d'image 4 puisse capturer une image nette. Pour ce faire il est par exemple possible de disposer le calcin 6 sur un support 8. C'est donc le support 8 qui est posé sur le convoyeur 10. Le support 8 comprend une source lumineuse 7 qui éclaire le calcin 6. Ainsi les rayons lumineux émis par la source lumineuse 7 traversent le support 8 par transparence, puis traversent chaque fragment de verre du calcin 6. Afin de permettre aux rayons lumineux de traverser le support 8, ce dernier présente un fond transparent sur lequel repose le calcin 6. Il en résulte une pluralité de rayon lumineux transmis 9 qui, après avoir traversé le calcin 6, sont captés par le dispositif d'acquisition d'image 4.

Dans le cas où le calcin 6 correspond à un échantillon d'un ensemble de fragments de verre, l'acquisition de l'image du calcin 6 peut se faire hors du convoyeur 10, avec un support 8 fixe sur lequel repose le calcin 6. Une fois le traitement effectué, le calcin 6 est ensuite placé sur le convoyeur 10.

D'une manière avantageuse, l'acquisition d'image par le dispositif d'acquisition d'image 4 peut se faire dans un milieu assombri, afin d'obtenir une image acquise du calcin 6 nette et permettant par la suite de correctement distinguer l'ensemble des différents types de verre, ainsi que l'ensemble des fragments y compris les plus petits. Par ailleurs, le dispositif d'acquisition d'image est ici dépourvu de filtre infrarouge afin de distinguer correctement les fragments de verre clairs des zones sans fragments.

Sur la figure 1, le calcin 6 est disposé sur le support 8, lui-même contenant la source lumineuse 7. Il est toutefois possible par exemple de mettre en place un convoyeur 10 transparent comportant la source lumineuse 7, le calcin 6 étant directement posé sur le convoyeur 10. La source lumineuse 7 est ainsi disposée à l'opposé du convoyeur 10 par rapport au calcin 6 et au dispositif d'acquisition d'image 4. La transparence du convoyeur 10 garantit ainsi aux rayons lumineux de traverser ce dernier ainsi que le calcin 6 jusqu'à atteindre le dispositif d'acquisition d'image 4.

D'une manière avantageuse, les fragments de verre du calcin 6 sont, préalablement à leur passage devant la source lumineuse 7, répartis sur l'ensemble du support 8 de sorte à éviter ou tout au moins limiter leur chevauchement, afin que l'acquisition d'image puisse se faire correctement pour l'ensemble du calcin 6. Notamment, sans que cela soit limitatif de l'invention, le support 8 et le calcin 6 qui y est disposé peuvent passer sur un poste où un peigne peut s'assurer d'une correcte répartition du calcin 6 sur l'ensemble du support 8.

Une fois l'image acquise du calcin 6 obtenue, celle-ci est transmise au module de traitement d'image 5. Ce dernier a notamment pour fonction de détecter la couleur de chacun des fragments de verre du calcin 6, et ce afin de déterminer à quel type de verre lesdits fragments correspondent. Le module de traitement d'image 5 peut notamment détecter plusieurs types de verre différents, malgré le fait que lesdits types de verre présentent une couleur similaire l'un par rapport à l'autre. Il s'agit là de la deuxième phase de traitement colorimétrique de l'étape de détection.

Afin de détecter correctement les différents types de verre du calcin 6, les couleurs détectées peuvent par exemple être comparées à une base de données du module de traitement d'image 5 afin d'en déduire le type de verre associé à chacune des couleurs détectées. Dans le cas d'une indécision, par exemple si la couleur détectée ne correspond pas exactement à un type de verre spécifique, le module de traitement d'image 5 peut associer le fragment de verre à un type de verre dont la couleur est la plus proche de la couleur détectée, ou bien classer le fragment de verre dans une catégorie à part, ladite catégorie regroupant les fragments de verre dont la couleur n'a pas été identifiée comme étant clairement spécifique à un type de verre particulier. La base de données peut être affinée au cours du temps.

Le module de traitement d'image 5 peut détecter les différents types de verre via un modèle HSV, RGB, ou bien une combinaison des deux modèles. Le modèle HSV est avantageux dans le sens où seul la valeur H peut être calculée afin de détecter les différents types de verre, tandis que le modèle RGB nécessite le calcul des trois données du modèle. Utilisés de manière combinée, le modèle HSV et le modèle RGB permettent d'effectuer une double détection. Chacun des fragments du calcin 6 est ainsi détecté comme correspondant à un type de verre spécifique. D'une manière générale, au sein d'un calcin 6, les couleurs de verre les plus retrouvées sont le verre clair, le verre vert et le verre ambre. Il peut toutefois exister plusieurs types de verre présentant une couleur sensiblement identique les uns par rapport aux autres. L'analyse par colorimétrie permet de distinguer ces différents types de verre entre eux, et ce malgré leur couleur semblable.

Le module de traitement d'image 5 peut également être apte à déterminer la quantité des différents types de verre présent dans le calcin 6, par exemple le volume relatif total de chacun des types de verre au sein du calcin 6. Le volume d'un type de verre spécifique, notamment dans le cas d'une image acquise en deux dimensions, est déterminé en se référant à la superficie totale des fragments de verre dont la couleur détectée correspond à celle de ce type de verre, ladite superficie étant calculée en fonction du nombre de pixels dans l'image acquise qui sont associés à cette couleur. La prise en compte de la superficie permet d'en déduire une donnée estimative de l'épaisseur de chaque type de verre détecté et de déterminer sur cette base un volume associé à ce type de verre spécifique. Autrement dit, pour chacun des types de verre du calcin 6, le volume d'un type de verre est fonction du nombre de pixels participant à former un motif d'une couleur correspondant à ce type de verre. Une telle corrélation a été établie par les inventeurs et présente un résultat qui est plus ou moins similaire au volume réel de chacun des types de verre au sein du calcin 6.

Le volume relatif total de chacun des types de verre est également dépendant d'une résolution du dispositif d'acquisition d'image 4. En effet, en fonction de ladite résolution, le nombre de pixels et la taille des pixels diffèrent d'un modèle de dispositif d'acquisition d'image 4 à l'autre. De telles données sont fournies dans un descriptif technique du dispositif d'acquisition d'image 4.

A titre d'exemple, pour déterminer le volume d'un verre de type A retrouvé dans le calcin 6, on détermine via le module de traitement d'image 5 le nombre de pixels qui sont identifiés comme étant associés à la couleur associée au verre de type A, puis on multiplie ce nombre de pixels par la taille d'un pixel. On calcule ainsi une superficie correspondant à une tache sur l'image de ladite couleur. Puis on en détermine un volume correspondant à ce verre de type A, sur la base d'un mode de calcul défini par les inventeurs qui sera détaillé par la suite.

Le volume de chacun des types de verre constitue un exemple de valeur quantitative de calcul de quantité des différents types de verre dans le calcin 6. D'autres mesures peuvent être effectuées afin de déterminer la quantité de chacun des types de verres du calcin 6 à partir de la mesure de la superficie des fragments du calcin 6.

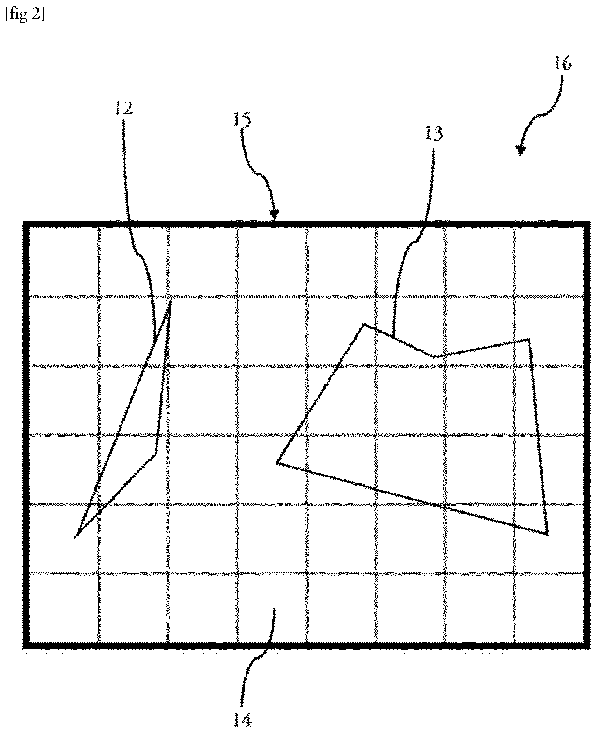

La figure 2 permet de montrer un exemple de détermination de la superficie des fragments de verre du calcin. La figure 2 représente de manière schématique une partie de l'image acquise 16 du calcin, après que le dispositif d'acquisition d'image a capturé le calcin.

Sur la figure 2, il est possible d'observer un premier fragment 12 et un deuxième fragment 13, tous deux faisant partie du calcin traité. Un quadrillage 15 permet de représenter virtuellement un ensemble de pixels 14.

Ainsi, après que le module de traitement d'image a reçu l'image acquise 16 et a identifié l'ensemble des types de verre présents dans le calcin par colorimétrie, l'objectif est de déterminer la superficie de l'ensemble des fragments du calcin afin d'en déduire leur volume.

Le module de traitement d'image analyse donc chacun des fragments en déterminant sur combien de pixels 14 ceux-ci s'étendent. En fonction de la résolution du dispositif d'acquisition d'image, un fragment particulier peut s'étendre sur plus ou moins de pixels 14, d'où l'importance de prendre en compte la résolution du dispositif d'acquisition d'image dans le calcul.

Grâce à la corrélation établie par les inventeurs entre la superficie et le volume, il est possible d'estimer le volume de chacun des fragments du calcin, et ce uniquement à partir de l'image acquise 16 en deux dimensions. Selon l'exemple de la figure 2, le deuxième fragment 13 présente une plus grande superficie que le premier fragment 12.

Le volume de chacun des fragments de verre est déterminé en fonction d'une corrélation entre la superficie du fragment et son épaisseur. Autrement dit, l'épaisseur de chacun des fragments est déduite en fonction de sa superficie respective. Une telle corrélation est déduite du fait que plus un fragment de verre présente une superficie élevée, plus ledit fragment a tendance à présenter une épaisseur élevée. Cette corrélation peut être établie de sorte que lorsqu'un fragment présente une superficie donnée, l'analyse de la valeur de cette superficie permet de classer le fragment dans une classe à laquelle est associée une épaisseur donnée. De manière alternative, un coefficient multiplicateur peut être appliqué à la superficie pour en déduire une épaisseur. La détermination de l'épaisseur du fragment combinée à la valeur de la superficie déterminée par le traitement d'image permet d'en déduire par la suite le volume dudit fragment. En se référant à l'exemple illustré sur la figure 2, après que le module de traitement d'image ait analysé que le deuxième fragment 13 présente une superficie plus importante que celle du premier fragment, il est déterminé une épaisseur correspondante à chaque fragment, avec une valeur d'épaisseur du premier fragment inférieur à la valeur d'épaisseur du deuxième fragment en se référant au modèle prédictif prévu par les inventeurs. Enfin, les volumes sont calculés et le deuxième fragment 13 présente un volume plus conséquent que le premier fragment 12.

Une fois que les volumes de chacun des fragments apparaissant sur l'image acquise 16 sont calculés, lesdits volumes sont additionnés par type de verre détectés. Par exemple, si le premier fragment 12 et le deuxième fragment 13 ont été détectés par colorimétrie comme étant du même type de verre, leur volume respectif est additionné l'un à l'autre, ainsi qu'avec le volume de l'ensemble des fragments dudit type de verre détectés sur l'image acquise 16. Si le premier fragment 12 et le deuxième fragment 13 correspondent à deux types de verre distincts l'un de l'autre, le volume du premier fragment 12 est additionné avec le volume des fragments correspondant au type de verre du premier fragment 12 et le volume du deuxième fragment 13 est additionné avec le volume des fragments du même type de verre.

Une fois que la somme des volumes des fragments du calcin est effectuée pour chaque type de verre, l'étape de calcul du procédé de traitement est alors terminée.

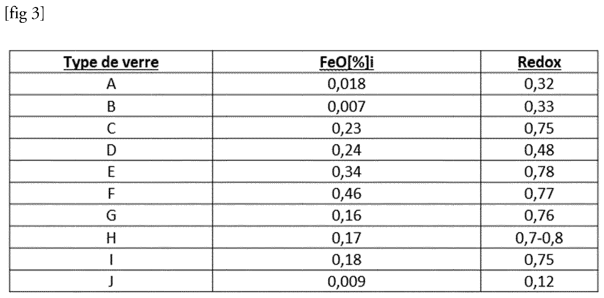

L'étape suivante est une étape de détermination d'une quantité d'oxyde et/ou d'un potentiel redox associés au calcin en fonction d'une quantité des différents types de verre détectés dans le calcin. Une telle étape n'est réalisable qu'une fois les différents types de verre détectés ainsi que leurs volumes respectifs. A titre d'exemple, la quantité d'oxyde de fer et le potentiel redox de chacun des types de verre est donnée à titre d'information dans la figure 3.

L'oxyde de fer est un élément chimique qui influe sur le potentiel redox du calcin, et de ce fait sur la fonte de ce dernier par le four verrier. Il est donc important de contrôler la quantité en oxyde de fer du calcin afin de paramétrer le four en conséquence et ainsi d'effectuer une fonte optimale du calcin. D'une manière générale, la quantité de tous types d'oxydes présents dans le calcin peut être déterminée. Chaque quantité en oxyde, et selon l'exemple de la figure 3 en oxyde de fer, est déterminée par un pourcentage massique constant au sein de chaque type de verre.

Au sein du tableau de la figure 3, plusieurs types de verre sont répertoriés et classés par nuance de couleur. On dénombre ainsi deux types de verre clair que sont les verres de types A et B, quatre types de verre de couleur verte que sont les verres de type C, D, E et F, trois types de verre de couleur ambre que sont les verres de type G, H et I, et un type de verre de couleur bleue qu'est le verre de type J. Chacun de ces types de verre présente un pourcentage massique en oxyde de fer invariable. D'après le tableau de la figure 3, il est ainsi possible d'en tirer des tendances, notamment que l'oxyde de fer est présent en très faible quantité au sein des verres clairs et du verre de couleur bleue et en quantité plus significative au sein des verres de couleur ambre. C'est au sein des verres de couleur verte que l'oxyde de fer est présent en plus grande quantité. Un calcin comprenant une quantité importante de fragments de verre de couleur verte présente donc une quantité globale d'oxyde de fer plus importante qu'un calcin de même masse totale, mais où le verre de couleur verte est minoritaire.

La quantité totale d'oxyde de fer présente dans le calcin se calcule selon la formule suivante :

$$FeO_{tot} = \rho_{verre} \times \sum (volume_i \times FeO_{[\%]i})$$

$\rho_{verre}$ étant la densité du verre, $volume_i$ étant le volume de chacun des types de verre calculé lors de l'étape de détection, et $FeO_{[\%]i}$ étant la concentration massique en oxyde de fer de chacun des types de verre que l'on retrouve dans le tableau de la figure 3. Ainsi, en multipliant le volume de chacun des types de verre par sa concentration massique en oxyde de fer qui lui est propre, puis en faisant la somme de chacun de ces produits obtenus, puis en multipliant le tout par la densité du verre, on trouve la quantité d'oxyde de fer totale présente dans le calcin. Une telle quantité peut être proportionnée par la suite si le calcin ne correspond qu'à un échantillon représentatif d'un ensemble plus massif de fragments de verre. Un tel calcul peut également être mis en application pour déterminer la quantité de tout autre type d'oxyde présent dans le calcin.

Un tel calcul peut également être fait de façon alternative ou complémentaire via le potentiel redox de chacun des types de verre, et ce afin d'obtenir le potentiel redox associé au calcin. Comme il est possible de le constater, le potentiel redox de chacun des types de verre n'est pas proportionnel à la concentration massique en oxyde de fer. Cela est notamment dû qu'il existe d'autres éléments aptes à faire varier le potentiel redox de chacun des types de verre au sein de ces derniers, comme par exemple l'oxyde de cuivre ou l'oxyde de chrome.

Il est notamment possible de constater que malgré un pourcentage massique en oxyde de fer sensiblement identique, le potentiel redox du verre C et du verre D diffèrent énormément l'un par rapport à l'autre, cette différence pouvant s'expliquer par la présence de réducteur en plus grand nombre pour le verre D, ou bien par une présence de quantité de fer total supérieur pour le verre D, le potentiel redox pouvant être calculé en effectuant le rapport entre la quantité d'ions Fe2+ et la quantité de fer total pour chacun des types de verre. Le choix du calcul de la quantité totale d'oxyde ou du potentiel redox associé au calcin peut par exemple dépendre de la composition du calcin.

Ceci étant fait, l'étape de détermination de la quantité d'oxyde et/ou du potentiel redox associés au calcin en fonction de la quantité des différents types de verre détectés dans le calcin est achevée.

Si l'on revient à la figure 1, on peut voir que le module de traitement d'image 5 peut communiquer avec un module de commande 30, et ce afin de transmettre la quantité d'oxyde présente dans le calcin 6 ou le potentiel redox de ce dernier.

Le module de commande 30 est apte à recevoir les informations suscitées et de modifier les paramètres du four verrier 3 en conséquence. Ainsi, les paramètres du four verrier 3 peuvent être modifiés en fonction de la composition du calcin 6, et ce afin d'entraîner une fonte optimale de ce dernier. Un équilibre redox du four verrier 3 peut notamment être modifié afin d'être adapté au potentiel redox ou à la quantité d'oxyde du calcin 6. La modification de l'équilibre redox du four verrier 3 peut par exemple être effectuée par ajout d'additifs, par exemple des agents oxydants, afin de diminuer l'oxydation du calcin 6. Il s'agit là d'une étape de paramétrage du four verrier 3.

Tel que représenté en figure 1, cette étape supplémentaire peut être entièrement automatisée de sorte à ce que le module de commande 30 puisse automatiquement modifier les paramètres du four verrier 3 en fonction des résultats fournis par le module de traitement 5. Sans sortir du contexte de l'invention, les instructions de paramétrage du four verrier 3 peuvent également être directement réalisées par le module de traitement 5. Le paramétrage du four verrier 3 peut également être fait manuellement par un opérateur. A ce titre, le module de traitement 5 peut par exemple comprendre un écran d'affichage des résultats lu par l'opérateur qui peut alors modifier ou non les paramètres du four verrier 3 en conséquence.

Les paramètres du four verrier 3 peuvent être modifiés de manière absolue, c'est-à-dire de manière individuelle par rapport à chaque nouveau calcin 6 destiné à être fondu. Les paramètres du four verrier 3 peuvent également être modifiés de manière relative, c'est-à-dire qu'ils sont modifiés en fonction d'un écart de résultats entre un calcin 6 et un calcin précédemment fondu par la même four verrier 3. Si l'écart en quantité d'oxyde ou en potentiel redox entre les deux calcins 6 est trop significatif, les paramètres du four verrier 3 sont modifiés en conséquence, les paramètres du four verrier 3 sont maintenus tels quels.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un procédé de traitement d'un calcin assurant sa fonte de manière optimale. Des variantes non décrites ici pourraient être mises en œuvre sans sortir du contexte de l'invention, dès lors que, conformément à l'invention, elles comprennent un procédé de traitement conforme à l'invention.

## Revendications

1. Procédé de traitement d'un calcin (6), **caractérisé en ce qu'**il comprend :

   - une étape de détection d'une pluralité de types de verre contenus dans le calcin (6) par colorimétrie,
   - une étape de calcul d'une quantité des différents types de verre détectés dans le calcin (6) en fonction des différents types de verre détectés par colorimétrie, une information représentative de la quantité de chacun des types de verre du calcin (6) étant calculée en fonction d'une superficie couverte par chaque couleur spécifique à chaque type de verre du calcin, ladite superficie étant mesurée sur une image acquise (16) du calcin (6) lors de l'étape de détection,
   - une étape de détermination d'une quantité d'oxyde et/ou d'un potentiel redox associés au calcin (6) en fonction de la quantité des différents types de verre détectés dans le calcin (6).

2. Procédé de traitement selon la revendication 1, au cours duquel l'étape de détection consiste en une première phase d'acquisition de l'image acquise (16) du calcin (6), puis en une deuxième phase de traitement colorimétrique de ladite image acquise (16) du calcin (6).

3. Procédé de traitement selon la revendication 2, au cours duquel la deuxième phase de traitement colorimétrique de l'image acquise (16) du calcin (6) est effectuée selon un modèle HSV et/ou selon un modèle RGB.

4. Procédé de traitement selon l'une quelconque des revendications précédentes, au cours duquel, lors de l'étape de calcul, la quantité des différents types de verre correspond à un volume total propre à chacun des types de verre du calcin (6) et calculé en fonction de ladite superficie.

5. Procédé de traitement selon l'une quelconque des revendications précédentes, en combinaison avec la revendication 2, au cours duquel la superficie couverte par chaque couleur spécifique à chaque type de verre du calcin (6) est calculée en fonction d'une taille de pixels (14) d'un dispositif d'acquisition d'image (4) utilisé pour la première phase d'acquisition et du nombre de pixels (14) d'un motif correspondant à chacune des couleurs.

6. Procédé de traitement selon l'une quelconque des revendications précédentes, au cours duquel on détermine la quantité d'oxyde dans le calcin (6) en fonction des quantités totales de chacun des types de verre du calcin (6).

7. Procédé de traitement selon l'une quelconque des revendications précédentes, au cours duquel on détermine le potentiel redox du calcin (6) en fonction d'un potentiel redox de chacun des types de verre présent dans le calcin (6) et de la quantité de chacun des types de verre du calcin (6).

8. Procédé de traitement selon l'une quelconque des revendications précédentes, comprenant une étape de paramétrage d'un four verrier (3) destiné à fondre le calcin (6), l'étape de paramétrage étant postérieure à l'étape de détermination de la quantité d'oxyde et/ou du potentiel redox, ledit paramétrage étant effectué en fonction de la quantité déterminée d'oxyde et/ou du potentiel redox associés au calcin (6).

9. Procédé de traitement selon la revendication précédente, au cours duquel, lors de l'étape de paramétrage, un équilibre redox du four verrier (3) est modifié par ajout d'additifs, la quantité desdits additifs étant fonction de la quantité d'oxyde et/ou du potentiel redox du calcin (6).

10. Installation (1) de fabrication de fibres minérales comportant au moins un four verrier (3) et des postes de formage, dans lequel du calcin (6) est déversé dans le four verrier pour l'obtention de verre fondu destiné à alimenter les postes de formage, ladite installation (1) mettant en œuvre un procédé de traitement d'un calcin (6) selon l'une quelconque des revendications précédentes.

[fig 1]

[fig 2]

[fig 3]

| Type de verre | FeO[%]i | Redox |
|---|---|---|
| A | 0,018 | 0,32 |
| B | 0,007 | 0,33 |
| C | 0,23 | 0,75 |
| D | 0,24 | 0,48 |
| E | 0,34 | 0,78 |
| F | 0,46 | 0,77 |
| G | 0,16 | 0,76 |
| H | 0,17 | 0,7-0,8 |
| I | 0,18 | 0,75 |
| J | 0,009 | 0,12 |

Europäisches
Patentamt

European
Patent Office

Office européen
des brevets

# RAPPORT DE RECHERCHE EUROPEENNE

Numéro de la demande

**EP 21 20 8637**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/101857 A1 (LEHMAN RICHARD L [US] ET AL) 18 mai 2006 (2006-05-18) * revendication 5 * ----- | 1-10 | INV. C03B1/00 C03C1/00 G01J3/46 G06T7/90 |
| X | EP 2 298 705 A2 (CULCHROME LLC [US]) 23 mars 2011 (2011-03-23) * revendication 13 * ----- | 1 | |
| X | US 2006/101856 A1 (LEHMAN RICHARD L [US] ET AL) 18 mai 2006 (2006-05-18) * revendication 11 * ----- | 1 | |
| X | US 2014/130553 A1 (DUFFY SEAN P [US] ET AL) 15 mai 2014 (2014-05-15) * revendication 24 * ----- | 1 | |

**DOMAINES TECHNIQUES RECHERCHES (IPC)**

C03B
C03C
G01J
G06T

Le présent rapport a été établi pour toutes les revendications

| Lieu de la recherche | Date d'achèvement de la recherche | Examinateur |
|---|---|---|
| La Haye | 23 mars 2022 | Flügel, Alexander |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 20 8637

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**23-03-2022**

| Document brevet cité au rapport de recherche | Date de publication | Membre(s) de la famille de brevet(s) | | Date de publication |
|---|---|---|---|---|
| US 2006101857 A1 | 18-05-2006 | AU | 2005304589 A1 | 18-05-2006 |
| | | BR | PI0516794 A | 23-09-2008 |
| | | CA | 2587465 A1 | 18-05-2006 |
| | | CN | 101193828 A | 04-06-2008 |
| | | CR | 9121 A | 23-11-2007 |
| | | EA | 200701045 A1 | 28-04-2008 |
| | | EP | 1838634 A2 | 03-10-2007 |
| | | JP | 2008519755 A | 12-06-2008 |
| | | MA | 29219 B1 | 01-02-2008 |
| | | NZ | 555355 A | 30-10-2009 |
| | | US | 2006101857 A1 | 18-05-2006 |
| | | US | 2008092596 A1 | 24-04-2008 |
| | | US | 2008236201 A1 | 02-10-2008 |
| | | WO | 2006053335 A2 | 18-05-2006 |
| EP 2298705 A2 | 23-03-2011 | AU | 749192 B2 | 20-06-2002 |
| | | CA | 2327324 A1 | 21-10-1999 |
| | | EP | 1077902 A1 | 28-02-2001 |
| | | EP | 2298705 A2 | 23-03-2011 |
| | | JP | 2002511380 A | 16-04-2002 |
| | | US | 6230521 B1 | 15-05-2001 |
| | | US | 6763280 B1 | 13-07-2004 |
| | | US | 2004078110 A1 | 22-04-2004 |
| | | US | 2005064117 A1 | 24-03-2005 |
| | | WO | 9952831 A1 | 21-10-1999 |
| US 2006101856 A1 | 18-05-2006 | AU | 2005304590 A1 | 18-05-2006 |
| | | BR | PI0516793 A | 23-09-2008 |
| | | CA | 2587466 A1 | 18-05-2006 |
| | | CN | 101203463 A | 18-06-2008 |
| | | CR | 9120 A | 23-11-2007 |
| | | EA | 200701046 A1 | 28-04-2008 |
| | | EP | 1846339 A2 | 24-10-2007 |
| | | JP | 2008519756 A | 12-06-2008 |
| | | MA | 29217 B1 | 01-02-2008 |
| | | NZ | 555354 A | 30-09-2010 |
| | | US | 2006101856 A1 | 18-05-2006 |
| | | WO | 2006053336 A2 | 18-05-2006 |
| US 2014130553 A1 | 15-05-2014 | AU | 2005306872 A1 | 26-05-2006 |
| | | CA | 2565415 A1 | 26-05-2006 |
| | | CN | 101044101 A | 26-09-2007 |
| | | EP | 1666427 A1 | 07-06-2006 |
| | | JP | 2008519753 A | 12-06-2008 |
| | | US | 2006122725 A1 | 08-06-2006 |
| | | US | 2014130553 A1 | 15-05-2014 |

EPO FORM P0460

Pour tout renseignement concernant cette annexe : voir Journal Officiel de l'Office européen des brevets, No.12/82

**page 1 de 2**

## ANNEXE AU RAPPORT DE RECHERCHE EUROPEENNE
## RELATIF A LA DEMANDE DE BREVET EUROPEEN NO.

**EP 21 20 8637**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**23-03-2022**

| Document brevet cité au rapport de recherche | Date de publication | Membre(s) de la famille de brevet(s) | Date de publication |
|---|---|---|---|
| | | WO    2006055238  A2 | 26-05-2006 |

Pour tout renseignement concernant cette annexe : voir Journal Officiel de l'Office européen des brevets, No.12/82

EPO FORM P0460

**page 2 de 2**